# EUROPÄISCHE PATENTSCHRIFT

(11) **EP 2 229 584 B1**
(45) Veröffentlichungstag und Bekanntmachung des Hinweises auf die Patenterteilung: **02.05.2018**
(21) Anmeldenummer: 08860697.5
(22) Anmeldetag: 28.11.2008
(51) Int. Cl.: G01N 21/954, G01B 11/24, G01B 9/02

(54) **SONDE UND VORRICHTUNG ZUM OPTISCHEN PRÜFEN VON MESSOBJEKTEN**
PROBE AND DEVICE FOR OPTICALLY TESTING MEASURED OBJECTS
SONDE ET DISPOSITIF POUR LA VÉRIFICATION OPTIQUE D'OBJETS À MESURER

(30) Priorität: 12.12.2007 DE 102007059903
(43) Veröffentlichungstag der Anmeldung: 22.09.2010
(73) Patentinhaber: Robert Bosch GmbH, 70442 Stuttgart (DE)
(72) Erfinder: GNAUSCH, Tobias, 70192 Stuttgart (DE)
(86) Internationale Anmeldenummer: PCT/EP2008/066404
(87) Internationale Veröffentlichungsnummer: WO 2009/074462

(56) Entgegenhaltungen:
- EP-A- 0 216 694
- WO-A-2005/019768
- WO-A-2005/082225
- WO-A-2006/032561
- DE-A1- 19 819 762
- DE-A1-102005 030 210
- US-A- 4 799 754
- US-A- 5 989 243

## Beschreibung

### Stand der Technik

Die Erfindung betrifft eine optische Sonde zum optischen Prüfen von Messobjekten gemäß dem Oberbegriff des Anspruchs 1 sowie eine Vorrichtung zur interferometrischen Messung von Messobjekten mit der Sonde.

Es ist z.B. in der industriellen Fertigung von Bauteilen bekannt, die Bauteile während oder nach ihrem Herstellungsprozess optisch zu überprüfen. Dabei wird mit einer optischen Sonde die Oberflächen der Bauteile beleuchtet und ein verwertbares Bild von der Oberfläche gewonnen. In diesem Zusammenhang wird auch von einem "optischen Abtasten" gesprochen und die Sonde als ein "Tastarm" bezeichnet.

Die WO 2005/082225 A1 zeigt eine optische Sonde zum optischen Prüfen von Messobjekten, insbesondere Hohlräumen im menschlichen Körper, mit feststehendem Sondenteil und damit gekoppeltem rotierbarem Sondenteil. Hierbei werden Beleuchtungsstrahlen über mehrere Ausgänge zu der Messfläche herausgeführt, von dort reflektiert und wieder in den rotierbaren Sondenteil eingeführt, um anschließend einem Aufnahmesystem für die Auswertung zugeführt zu werden.

Weitere optische Sonden sind in der EP-A 0 216 694, der US-A 5,989,243 und der US-A 4,799,754 gezeigt.

Weitere optische Sonden sind in DE19819762 A1, DE102005030210 A1 und WO2006032561 A1 gezeigt.

Insbesondere sind auch optische Sonden eingesetzt worden, die eine Unterteilung in einen feststehenden und in einen rotierbaren Sondenteil aufweisen. Eine solche Vorrichtung wird beispielsweise in DE 100 57 540 A1 beschrieben. Gemäß der Lehre in der Schrift ermöglicht solch eine Anordnung eine relativ einfache Ausrichtung zum Abtasten des Messobjektes und eine Auslegung des Sondenteils für eine präzise rotierende Abtastung. So kann z.B. eine sehr enge Bohrung einer Einspritzdüse von innen von einem rotierenden Sondenteil abgetastet werden. Vorteilhafterweise braucht daher das Messobjekt selbst nicht rotiert zu werden. Sollen jedoch mehrere Bauteile mit z.B. unterschiedlichen Bohrungsdurchmessern vermessen werden, ist ein Prüfen aller Bauteile mit einer einzigen, in der Lehre beschriebenen Sonde nicht möglich, da die Fokuslänge der Sonde auf einen festen Wert eingestellt ist. Die gleiche Problematik entsteht, wenn ein Bauteil an verschiedenen Stellen vermessen werden soll, die jeweils voneinander unterschiedlich großen Durchmesser aufweisen.

Hingegen ist aus DE 197 14 202 A1 eine weitere Vorrichtung zum optischen Prüfen einer Oberfläche bekannt, wobei das zu prüfende Messobjekt gleichzeitig an zwei verschiedenen Stellen mittels zweier Messstrahlen beleuchtet werden kann. Insbesondere wird in einem Ausführungsbeispiel durch zwei nicht zueinander parallel verlaufenden Messstrahlen ermöglicht, zwei Stellen des Messobjektes gleichzeitig senkrecht zu beleuchten, die nicht in einer Ebene liegen. Diese Sonde bietet also zwei unterschiedliche Blickrichtungen. Ein rotierbarer Sondenteil ist dabei nicht vorgesehen.

Die bisher bekannten optischen Sonden ermöglichen daher nicht, mit nur einer Sonde Bauteile mit unterschiedlichen Innendurchmessern zu vermessen. Insbesondere ist es leider auch bei Vermessung nur eines Bauteils notwendig, eine Sonde auszutauschen und dabei die neue Sonde neu zu justieren, wenn der eine Bauteil an mehreren Stellen unterschiedliche Innendurchmesser aufweist.

### Vorteile der Erfindung

Die erfindungsgemäße optische Sonde bzw. die erfindungsgemäße Vorrichtung mit der Sonde hat den Vorteil, dass ein sehr flexibler Einsatz der Sonde ermöglicht wird. Vorteilhaft braucht die erfindungsgemäße Sonde auch bei mehreren Vermessungen von unterschiedlich großen Innendurchmessern nicht ausgetauscht zu werden.

Folglich entfällt die Notwendigkeit, eine neue Sonde bei verändertem Abstand der zu vermessenden Prüffläche gegenüber der Sonde einzusetzen und dabei neu zu justieren.

Vorteilhafte Weiterbildungen der Erfindung sind in den Unteransprüchen angegeben und in der Beschreibung beschrieben.

### Zeichnung

Ausführungsbeispiele der Erfindung werden anhand der Zeichnungen und der nachfolgenden Beschreibung näher erläutert. Es zeigen:
Figur 1 eine aus dem Stand der Technik bekannte Sonde,
Figur 1a einen Ausschnitt aus der Fig. 1,
Figur 2 ein Ausführungsbeispiel der erfindungsgemäßen Sonde, und
Figur 2a einen Ausschnitt aus der Fig. 2.

### Beschreibung der Ausführungsbeispiele

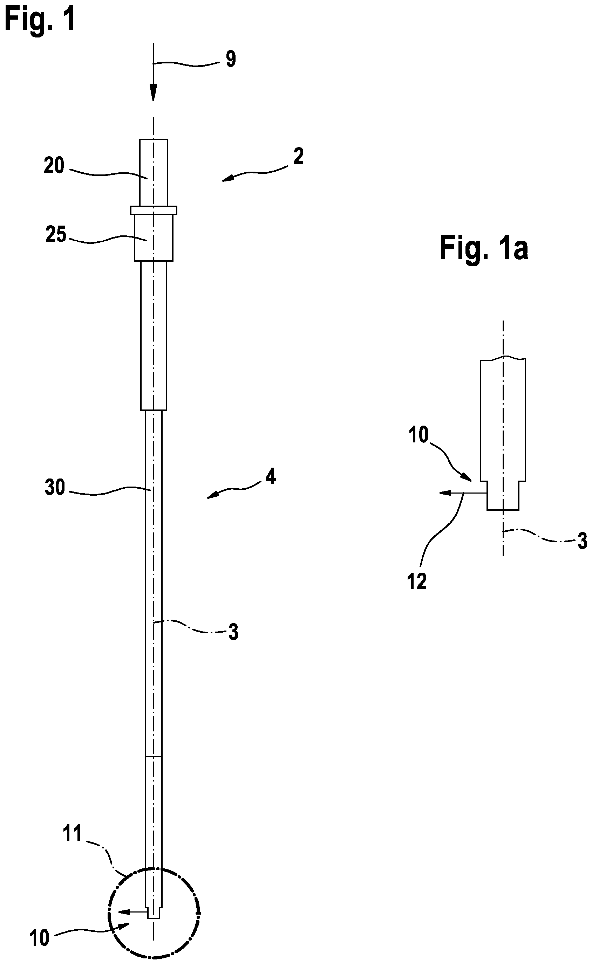

In Figur 1 ist zunächst eine aus dem Stand der Technik bekannte optische Sonde 2 dargestellt. Die Sonde 2 weist einen feststehenden Sondenteil und einen mit diesem mechanisch und optisch gekoppelten rotierbaren Sondenteil 4 auf. Aus Übersichtlichkeitsgründen ist in Fig. 1 nur der rotierbare Sondenteil 4 eingezeichnet. Vom nicht zeichnerisch dargestellten, feststehenden Sondenteil werden Strahlen 9 dem rotierbaren Sondenteil 4 zugeführt. Die Strahlen werden weiter über optische Elemente 30 zu einem optischen Ausgang 10 in einem Ausgangsbereich 11 geführt.

Der rotierbare Sondenteil 4 ist über eine Ferrule 20 mit dem feststehenden Sondenteil verbunden. Eine Hülse 25 hält die Ferrule 20 sowie die optischen Elemente 30 stabil zusammen zu einem Sondenteil 4.

Der Ausgangsbereich 11 der Sonde 2 ist in Figur 1a vergrößert abgebildet. Insbesondere ist es zu erkennen, dass nur ein optischer Ausgang 10 zur Beleuchtung des Messobjektes vorgesehen ist. Dabei ist in Fig. 1a zum besseren Verständnis schematisch ein fokussierter Messstrahl 12 eingezeichnet, der senkrecht zu einer Drehachse 3 aus der Sonde 2 austritt.

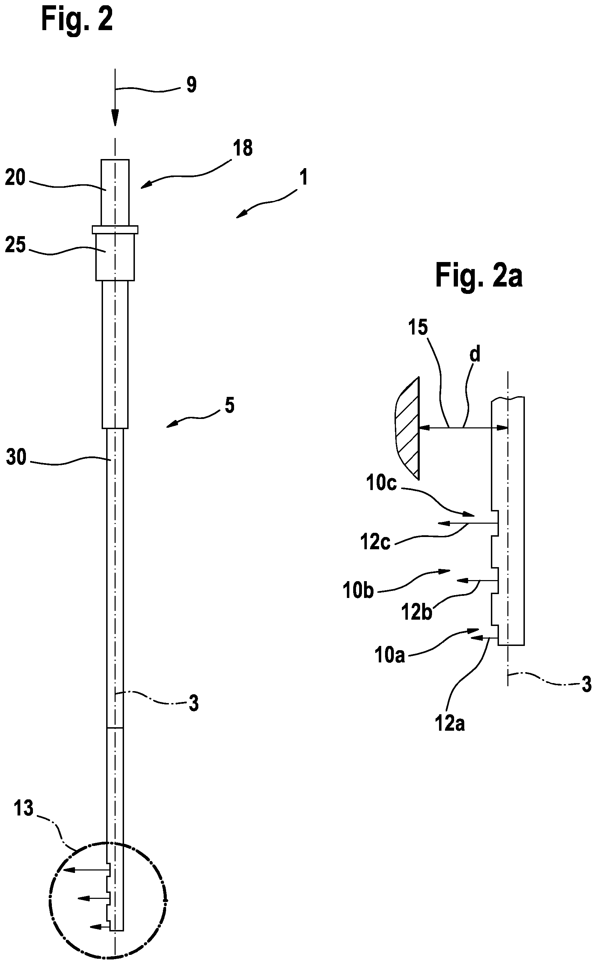

Im Vergleich hierzu ist in Figuren 2 und 2a ein Ausführungsbeispiel einer erfindungsgemäßen Sonde 1 zum optischen Prüfen von Messobjekten abgebildet. Sie umfasst einen feststehenden, zeichnerisch ebenfalls nicht dargestellten Sondenteil und einen mit diesem mechanisch und optisch gekoppelten, um eine Drehachse 3 rotierbaren Sondenteil 5, wobei der rotierbare Sondenteil 5 mindestens zwei optische Ausgänge 10a; 10b; 10c zur Auskoppelung von Messstrahlen umfasst, aus denen die Messstrahlen senkrecht gegenüber der Drehachse 3 austreten mit voneinander unterschiedlichen Fokusabständen d.

In Fig. 2a ist der Ausgangsbereich 13 vergrößert dargestellt, so dass die mehreren Ausgänge 10a; 10b; 10c klar zu erkennen sind. Beispielhaft sind hier drei Ausgänge 10a; 10b; 10c dargestellt, wobei die fokussierten Messstrahlen 12a; 12b; 12c voneinander abweichende Längen bzw. Fokusabstände d aufweisen. Unter einem Fokusabstand d, der in Fig. 2a mit der Bezugsnummer 15 abgebildet ist, wird der Abstand zwischen der Drehachse 3 des rotierenden Sondenteils 5 und dem Fokuspunkt eines fokussierten Messstrahls 12a; 12b; 12c verstanden. Die Drehsachse 3 ist gleichzeitig auch die Symmetrieachse des rotierenden Sondenteils 5. Der Fokuspunkt des Messstrahls trifft im idealen Fall genau auf die Oberfläche des Messobjekts. Nun können sehr vorteilhaft mit nur einer Sonde 1 bzw. einem rotierenden Sondenteil 5 auch unterschiedlich starke Bohrungsdicken von innen vermessen werden, da mehrere Ausgänge mit voneinander unterschiedlich großen Fokusabständen d bereitgestellt werden.

Wie in Fig. 2a erkennbar, wird weiter vorgeschlagen, die optischen Ausgänge 10a; 10b; 10c entlang der Drehachse 3 nach ihren unterschiedlichen Fokusabständen d 15 geordnet zu positionieren. In diesem Beispiel sind die Ausgänge mit absteigenden Fokusabständen d zum Sondenende hin angeordnet. So kann der richtige Ausgang für eine konktrete, vorliegende Bohrungsdicke schnell und systematisch bestimmt werden.

Im übrigen ist der rotierbare Sondenteil 5 über eine Koppelstelle 18 mit dem feststehenden Sondenteil verbunden. Über diese Koppelstelle 18 werden Strahlen 9 aus dem feststehenden, nicht eingezeichneten Sondenteil dem rotierenden Sondenteil 5 zugeführt. Die Koppelstelle 18 ist dabei vorteilhaft durch eine Ferrule 20 am rotierbaren Sondenteil 5 ausgebildet. Diese Ferrule 20 ist vorteilhaft mit einer Glasfaser durchzogen, in die die Strahlen 9 eingekoppelt werden. Hierdurch wird, falls Bedarf gegeben sein sollte durch z.B. Beschädigung am rotierenden Sondenteil 5, ein schnelles Austauschen des rotierenden Sondenteils 5 ermöglicht. In der Praxis wird beispielsweise eine 2,5 mm starke Ferrule 20 eingesetzt.

Weiter umfasst der rotierbare Sondenteil 5 eine Hülse 25, die die Ferrule 20 und optische Komponenten 30 zusammenhält oder diese stabilisiert. So wird eine kompakte und gleichzeitig robuste Anordnung erzielt. Diese optischen Komponenten 30 dienen der Fokussierung und/oder der Ablenkung des Messstrahls und können zusätzlich durch ein oder mehrere Metallröhren geschützt und weiter stabilisiert werden.

Unabhängig davon, ob die Koppelstelle 18 durch eine Hülse 25 ausgebildet ist oder nicht, kann die Koppelstelle 18 auch durch eine Drehkupplung realisiert sein. Besonders vorteilhaft ist es, wenn die Drehkupplung in Form einer LWL (Lichtwellenleiter)-Drehkupplung vorgesehen ist.

Damit die Messstrahlen aus dem rotierbaren Sondenteil 5 korrekt abgelenkt werden zur senkrechten Beleuchtung des Messobjektes, ist eine Umlenkoptik im Strahlengang der Messstrahlen notwendig. Es wird für jeden optischen Ausgang 10a; 10b; 10c der mindestens zwei optischen Ausgänge 10a; 10b: 10c eine eigene Umlenkoptik im rotierbaren Sondenteil 5 angeordnet. Dadurch wird die exakte Einstellung des Fokusabstands d für jeden einzelnen optischen Ausgang 10a; 10b; 10c erleichtert. Dabei umfasst jede Umlenkoptik genau ein Prisma.

Die Umlenkoptiken sind hintereinander entlang der Drehachse 3 angeordnet. Wichtig ist dabei, dass diese zueinander sehr genau ausgerichtet sein müssen, um die erwünschten Fokusabstände d zu realisieren. Die auf die Umlenkoptiken einfallenden Strahlen 9 werden teilweise zu den jeweiligen Ausgängen 10a; 10b; 10c abgelenkt, teilweise geradeaus weitergeführt zu der nächstangeordneten Umlenkoptik. Die Umlenkoptiken sind also teilweise durchlässig und teilweise ablenkend.

In einer weiteren Ausführungsform ist in der Sonde 1 eine Schaltvorrichtung zum unabhängigen Ein- oder Ausschalten einzelner optischen Ausgänge 10a; 10b; 10c vorgesehen. Vorteilhaft kann der Anwender damit gezielt bestimmte Ausgänge aktivieren oder deaktivieren.

Übrigens wird der an der Oberfläche des Messobjektes reflektierte Messstrahl wieder durch die Sonde 1 bzw. rotierbaren Sondenteil 5 aufgenommen. Typischerweise durchläuft der reflektierte Messstrahl nun den bisherigen Strahlengang in umgekehrter Richtung, d.h. er wird am Ausgang 10a; 10b; 10c der Sonde 1 wieder in den rotierbaren Sondenteil 5 eingeführt und verlässt den rotierbaren Sondenteil 5 an der Koppelstelle 18. Der Begriff "Ausgang" bezieht sich, wie für einen Fachmann geläufig, nicht auf den vom Messobjekt reflektierten Messstrahl. Der wieder aus der gesamten Sonde 1 herausgeführte Messstrahl wird sodann einer Detektionseinheit zugeführt, an der eine Auswerteeinheit angeschlossen ist. So wird eine Analyse der mit der Sonde 1 beleuchteten Messobjekte ermöglicht.

Alle bisher beschriebenen Ausführungsformen der Sonde 1 sind übrigens geeignet, mit einem an sich bekannten Interferometer verbunden zu werden. Zusammen bilden sie dann eine Vorrichtung zur interferometrischen Messung von Messobjekten. Idealerweise ist das Interferometer mit der Sonde 1 mittels einer Lichtleitfaser verbunden. Der Aufbau eines typischen Interferometers wird nicht weiter erläutert, da dieser bereits z.B. in eingangs zitierten Schrift DE 100 57 540 A1 ausführlich beschrieben wurde. Es sei nur betont, dass das Interferometer neben einer Detektionseinheit auch eine Auswerteeinheit umfassen kann.

Zusammenfassend wird festgestellt, dass eine optische Sonde 1 mit einem feststehenden Sondenteil und einem rotierbaren Sondenteil 5 beschrieben wurde, mit der ein größeres Spektrum von Bauteilen mit unterschiedlichen Bohrungsdurchmessern vermessen werden kann. Hierzu sind im rotierbaren Sondenteil 5 mindestens zwei optische Ausgänge 10a; 10b; 10c zur Auskoppelung von Messstrahlen vorgesehen, aus denen die Messstrahlen senkrecht gegenüber einer Drehachse 3 des rotierbaren Sondenteils 5 austreten mit voneinander unterschiedlichen Fokusabständen d 15. Weiter wurde eine Vorrichtung vorgeschlagen, die ein an sich bekanntes Interferometer und die beschriebene Sonde 1 umfasst. Insgesamt wird hierdurch eine bei unterschiedlichen Messobjekten sehr vielfältig einsetzbare optische Sonde 1 erzielt.

## Patentansprüche

1. Optische Sonde (1) zum optischen Prüfen von Messobjekten, umfassend einen feststehenden Sondenteil und einen mit diesem mechanisch und optisch gekoppelten, um eine Drehachse (3) rotierbaren Sondenteil (5), wobei der rotierbare Sondenteil (5) über eine optische Koppelstelle (18) mit dem feststehenden Sondenteil gekoppelt ist und mindestens zwei optische Ausgänge (10a; 10b; 10c) zur Auskoppelung von Messstrahlen (12a; 12b; 12c)
umfasst, aus denen die Messstrahlen (12a; 12b; 12c) mit voneinander unterschiedlichen Fokusabständen d (15) gegenüber der Drehachse (3), austreten,
wobei über die Koppelstelle (18) Strahlen (9) aus dem feststehenden Sondenteil dem rotierenden Sondenteil (5) zugeführt werden und der rotierbare Sondenteil (5) über die Koppelstelle (18) auch mechanisch mit dem feststehenden Sondenteil verbunden ist, wobei die Koppelstelle (18) durch eine Ferrule (20) am rotierbaren Sondenteil (5) ausgebildet ist und die Ferrule (20) mit einer Glasfaser durchzogen ist, in die die Strahlen (9) eingekoppelt werden, wobei die Drehachse (3) gleichzeitig auch eine Symmetrieachse des rotierenden Sondenteils (5) bildet, wobei die von den Ausgängen (10a; 10b; 10c) austretenden Messstrahlen (12a; 12b; 12c) senkrecht zur Drehachse (3) über die Ausgänge (10a; 10b; 10c) austreten und wobei den Ausgängen (10a; 10b; 10c) jeweils zugeordnete Umlenkoptiken hintereinander ausgerichtet entlang der Drehachse (3) angeordnet sind,
**dadurch gekennzeichnet, dass** jede Umlenkoptik genau ein Prisma umfasst und die auf die Umlenkoptiken einfallenden Strahlen (9) teilweise zu den Ausgängen (10a; 10b; 10c) abgelenkt und teilweise zu der nächstangeordneten Umlenkoptik geradeaus weitergeführt werden, wozu die Umlenkoptiken teilweise durchlässig und teilweise ablenkend sind.

2. Sonde (1) nach Anspruch 1,
**dadurch gekennzeichnet,**
**dass** die optischen Ausgänge (10a; 10b; 10c) entlang der Drehachse (3) nach ihren unterschiedlichen Fokusabständen d (15) geordnet positioniert sind.

3. Sonde (1) nach einem der vorhergehenden Ansprüche,
**dadurch gekennzeichnet,**
**dass** die Koppelstelle (18) durch eine Drehkupplung, insbesondere durch eine LWL (Lichtwellenleiter)-Drehkupplung, ausgebildet ist.

4. Sonde (1) nach einem der vorhergehenden Ansprüche,
**dadurch gekennzeichnet,**
**dass** der rotierbare Sondenteil (5) eine Hülse (25) umfasst, die die Ferrule (20) und optische Komponenten (30) zusammenhält oder diese stabilisiert.

5. Sonde (1) nach einem der vorhergehenden Ansprüche,
**dadurch gekennzeichnet,**
**dass** eine Schaltvorrichtung zum unabhängigen Ein- oder Ausschalten einzelner optischen Ausgänge (10a; 10b; 10c) vorgesehen ist.

6. Vorrichtung zur interferometrischen Messung von Messobjekten, wobei ein Interferometer verbunden ist mit einer Sonde (1) nach einem der Ansprüche 1 bis 5.

## Claims

1. Optical probe (1) for optical testing of test objects, comprising a stationary probe part and a probe part (5) that is mechanically and optically coupled to said stationary probe part and that is rotatable about an axis of rotation (3), wherein the rotatable probe part (5) is coupled to the stationary probe part by way of an optical coupling point (18) and comprises at least two optical outputs (10a; 10b; 10c) for output coupling of measurement beams (12a; 12b; 12c), said measurement beams (12a; 12b; 12c) emerging from said optical outputs with focal distances d (15) in relation to the axis of rotation (3) that differ from one another,
wherein beams (9) are supplied to the rotatable probe part (5) from the stationary probe part via the coupling point (18) and the rotatable probe part (5) is also mechanically connected to the stationary probe part via the coupling point (18), wherein the coupling point (18) is formed by a ferrule (20) at the rotatable probe part (5) and an optical fibre, into which the beams (9) are input coupled, passes through the ferrule (20), wherein the axis of rotation (3) at the same time also forms an axis of symmetry of the rotating probe part (5), wherein the measurement beams (12a; 12b; 12c) that emerge from the outputs (10a; 10b; 10c) emerge from the outputs (10a; 10b; 10c) in a manner perpendicular to the axis of rotation (3) and wherein the deflection optical units that are respectively assigned to the outputs (10a; 10b; 10c) are arranged aligned in succession along the axis of rotation (3),
**characterized in that** each deflection optical unit comprises exactly one prism and the beams (9) that are incident on the deflection optical units are partly deflected to the outputs (10a; 10b; 10c) and partly guided on straight ahead to the deflection optical unit arranged next, for the purposes of which the deflection optical units are partly transmissive and partly deflective.

2. Probe (1) according to Claim 1,
**characterized**
**in that** the optical outputs (10a; 10b; 10c) are positioned along the axis of rotation (3), ordered according to their different focal distances d (15) .

3. Probe (1) according to any one of the preceding claims,
**characterized**
**in that** the coupling point (18) is formed by a rotary joint, in particular by a fibre-optic rotary joint.

4. Probe (1) according to any one of the preceding claims,
**characterized**
**in that** the rotatable probe part (5) has a jacket (25) which holds together, or stabilizes, the ferrule (20) and optical components (30).

5. Probe (1) as claimed in any one of the preceding claims,
**characterized**
**in that** provision is made of a switching apparatus for independently enabling or disabling individual optical outputs (10a; 10b; 10c).

6. Apparatus for measuring test objects by interferometry, wherein an interferometer is connected to a probe (1) according to any one of Claims 1 to 5.

## Revendications

1. Sonde optique (1) destinée à la vérification optique d'objets de mesure, comprenant une partie de sonde fixe et une partie de sonde (5) couplée mécaniquement et optiquement à celle-ci et pouvant tourner autour d'un axe de rotation (3), dans laquelle la partie de sonde tournante (5) est couplée à la partie de sonde fixe par l'intermédiaire d'un point de couplage optique (18) et comprend au moins deux sorties optiques (10a ; 10b ; 10c) permettant l'extraction de faisceaux de mesure (12a ; 12b ; 12c), sorties à partir desquelles les faisceaux de mesure (12a ; 12b ; 12c) sortent avec des distances focales d (15) différentes les unes des autres par rapport à l'axe optique (3),
dans laquelle des faisceaux (9) provenant de la partie de sonde fixe sont acheminés par l'intermédiaire du point de couplage (18) à la partie de sonde tournante (5) et la partie de sonde tournante (5) est également reliée mécaniquement à la partie de sonde fixe par l'intermédiaire du point de couplage (18), dans laquelle le point de couplage (18) est constitué d'une férule (20) sur la partie de sonde tournante (5) et la férule (20) est traversée par une fibre de verre dans laquelle les faisceaux (9) sont injectés,
dans laquelle l'axe de rotation (3) forme également de manière simultanée un axe de symétrie de la partie de sonde tournante (5),
dans laquelle les faisceaux de mesure (12a ; 12b ; 12c) provenant des sorties (10a ; 10b ; 10c) sortent perpendiculairement à l'axe de rotation (3) par l'intermédiaire des sorties (10a ; 10b ; 10c), et
dans laquelle des optiques de déviation respectivement associées aux sorties (10a ; 10b ; 10c) sont disposées de manière alignée les unes à la suite des autres le long de l'axe optique (3),
**caractérisée en ce que** chaque optique de déviation comprend exactement un prisme et **en ce que** les faisceaux (9) incidents sur les optiques de déviation sont partiellement déviés vers les sorties (10a ; 10b ; 10c) et partiellement réacheminés en ligne droite vers l'optique de déviation suivante, lesdites optiques de déviation étant partiellement transparentes et partiellement diffractantes.

2. Sonde (1) selon la revendication 1,
**caractérisée en ce que** les sorties optiques (10a ; 10b ; 10c) sont positionnées de manière ordonnée le long de l'axe optique (3) en fonction de leurs différentes distances focales d (15).

3. Sonde (1) selon l'une des revendications précédentes,
**caractérisée en ce que** le point de couplage (18) est constitué par un joint tournant, notamment par un joint tournant LWL (guide d'ondes optique).

4. Sonde (1) selon l'une des revendications précédentes,
**caractérisée en ce que** la partie de sonde tournante (5) comprend un manchon (25) qui maintient assemblés la férule (20) et les composants optiques (30) ou stabilise ces derniers.

5. Sonde (1) selon l'une des revendications précédentes,
**caractérisée en ce qu'**il est prévu un dispositif de commutation destiné à activer ou désactiver indépendamment des sorties optiques individuelles (10a ; 10b ; 10c).

6. Dispositif de mesure interférométrique d'objets de mesure, dans lequel un interféromètre est relié à une sonde (1) selon l'une des revendications 1 à 5.
